# EUROPEAN PATENT SPECIFICATION

(11) **EP 2 524 591 B1**
(45) Date of publication and mention of the grant of the patent: **17.04.2019**
(21) Application number: 12386015.7
(22) Date of filing: 09.05.2012
(51) Int. Cl.: A01J 5/04, A01J 7/00

(54) **Automatic sheep and goats milking valve**
Automatisches Melkventil für Schafe und Ziegen
Soupape de traite automatique pour ovins et chèvres

(30) Priority: 19.05.2011 GR 20110100301
(43) Date of publication of application: 21.11.2012
(73) Proprietor: Sylco Hellas K. Sylaios S.A., 570 13 VIPA Oraiokastrou, Thessaloniki (GR)
(72) Inventor: Sylaios, Konstantinos, 570 13 Oreokastro Thessalonikis (GR)

(56) References cited:
- EP-A1- 0 088 580
- EP-A1- 0 566 977
- GB-A- 2 021 379
- GB-A- 191 416 366
- US-A- 4 481 906

## Description

This invention relates to an automatic milking valve for sheep and goats, which is used in mechanical sheep and goats milking systems

When sheep and goats are mechanically milked using vacuum and breast pumps (devices consisting of an elastic part that comes in contact with the animal's breast, and an outer shell), vacuum is applied at the tips of the animal's breast in order to suck the excreted milk. Milk excretion is achieved by applying mechanical force on the outer breast's surface; this force is applied repeatedly in the form of continuous pulses mimicking the motion of the human hand. The more constant the level of vacuum applied on the animal's nipples, the lower the possibilities for irritation and mastitis will be.

In order for the whole device to operate, a milk transfer line and a pulse transmission line are required.

It is common practice to use Y-branch devices in mechanical milking systems in order to collect the milk from the two animal's breasts and to route it via a single flexible tube to the milking pail or to the constant milk supply line.

Each such device contains a mechanism (valve) that stops and starts the supply of vacuum to the breasts causing milking to start or stop. This valve can be mechanical (the operator opens or closes it), semi-automatic (the operator opens it and then the valve closes by itself when the breast pumps are removed or high vacuum leak occurs), or fully automatic (the operator simply places the breast pumps and the valve activates by itself and enables milking to start and then closes the supply by itself when the breast pumps are removed or when high vacuum leak occurs in the system).

All currently known implementations pose a series of problems.

The mechanical valves require the operator to perform certain actions and produce a delay to the actual milking time, as well as significant leaks in the vacuum system in case a breast pump is removed or falls from the animal's breast.

The semi-automatic ones ensure the vacuum level in case of breast pump fall, but they also require handling in order to start the milking process, which takes time and makes the whole procedure more difficult for the operator.

The known automatic milking valves usually consist of several small and fragile parts (very thin springs, small breathing holes that can be easily blocked, small flanges that can be lost during cleaning), and they pose problems due to the complexity of the procedure used for cleaning them from the milk and their easy disassembly and assembly procedures. Their behavior during washing is also problematic. Due to the large quantities of water and air passing through them, the valves often close by themselves and are not cleaned. This is the reason why all of them are equipped with a selector that forces them to stay open during the washing phase.

Document US 4481906 discloses a valve for use in a suction line comprising a milk inlet, a milk outlet, a milk chamber, a ball and a plunger which can move the ball from a position closing the milk outlet to a milking position opening the outlet due to the presence of vacuum in the milk outlet. A cleaning position is achieved when the plunger is fixed in the closing position.

The advantage of this invention is that it comes to improve the quality and safety of milking, the ease and simplicity of use by the operator, as well as to improve the hygienic conditions, the milk quality and the milking speed.

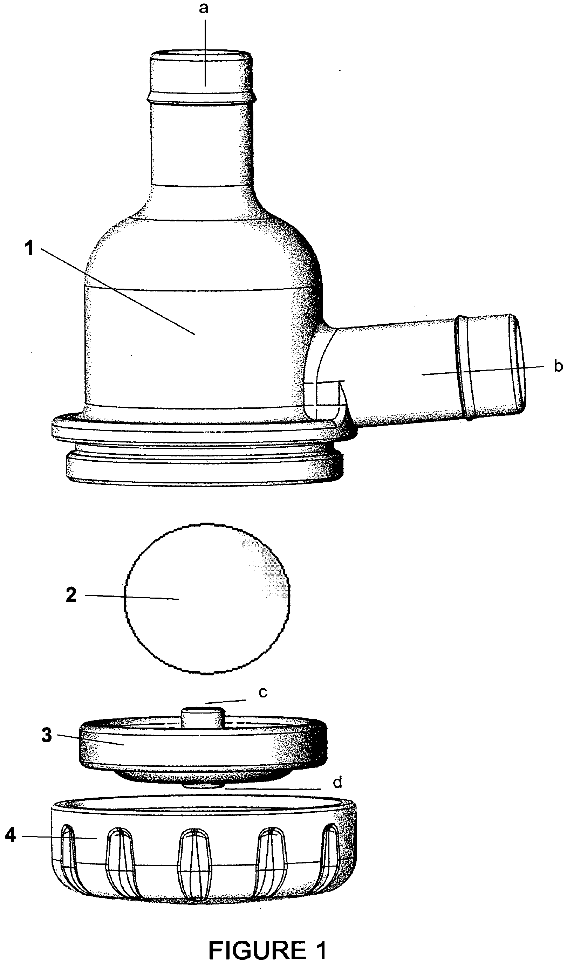

The automatic sheep and goats milking valve consists of just four parts, as shown in figure 1:
The valve body (1), which has a single milk inlet (a) and a single milk outlet (b) perpendicular to one another's axes, the ball (2), the reciprocating membrane (3) with an inner (c) and an outer (d) protrusion, and the retaining nut (4)

The operation of the automatic sheep and goats milking valve is achieved as follows:
There is a ball that can move inside the main body of the automatic sheep and goats milking valve on the virtual extension of the milk inlet axis.

When the milking machine is set in operation (due to gravity, the ball is at the lowest point of its available travel (h) and rests on protrusion (c) of the reciprocating membrane), air suction from the milk outlet (b) begins. The air entering from the milk inlet (a) moves the ball, which then blocks the milk outlet.
Thus the air influx is restricted and the vacuum reaches the desired level (usually 38-40 kPa) inside the milking assembly upstream of the automatic sheep and goats milking valve. There is no sealing medium between the ball and the outlet, so a small vacuum leak towards the inside of the automatic sheep and goats milking valve is permitted.
When the breast pump is placed on the animal's breast, the air inflow is blocked by the nipple of the animal that acts as a cap. Due to the leak from the milk outlet, (b) the air pressure level inside the automatic sheep and goats milking valve starts to drop. However, the difference between the inner pressure of the automatic sheep and goats milking valve and the normal external atmospheric pressure causes the membrane to move towards the inside of the automatic sheep and goats milking valve. As the membrane moves inside, protrusion (c) moves the ball upwards and unblocks the milk outlet. Equalization of the vacuum level inside the automatic sheep and goats milking valve with the rest of the milking machine occurs immediately, and the milking process begins. The milk entering the automatic sheep and goats milking valve from inlet (a) falls on the ball, sheds all around it and exits via the outlet. The ball helps to achieve better milk quality because as the milk falls over the ball its speed decreases, and thus it does not damage the structure of its fats. When the milking procedure ends and the breast pump is removed, or in case the breast pump falls accidentally, the inner pressure of the automatic sheep and goats milking valve is equalized with the outer pressure, the membrane moves to its rest position due to the weight of the ball (i.e. gravity is used and no spring or other device is required) and the air moves the ball and blocks the milk outlet.

In case the ball gets stuck, if pressure is applied using a finger on protrusion (d), the ball is forced to move away from the milk outlet, thus providing the additional feature of manually starting the automatic sheep and goats milking valve.

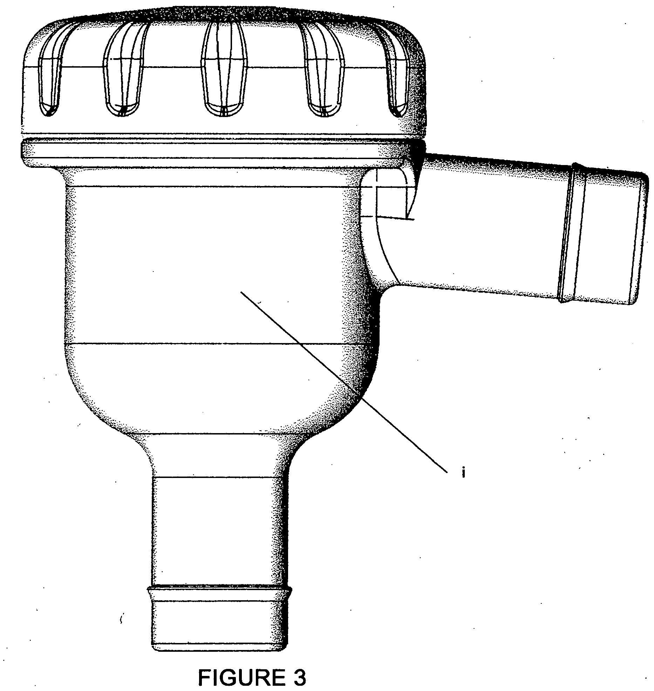

During cleaning, the breast pump is turned upside down (the milk inlet facing down) (figure 3) (i) so the ball moves to the end of its travel (f), away from the milk outlet (b) and thus cannot block it.

The body of the automatic sheep and goats milking valve is made of high quality and transparency plastic material suitable for use with food.

It allows a complete visual inspection of the milk flow from all possible angles of view, helping the operator to immediately know when milking is over and to remove the breast pumps as soon as possible, thus accelerating the whole process and helping the animal to remain healthy since its breast is relieved sooner from the vacuum.

All surfaces are smooth and easily accessible by the water during the clean in-place (CIP) procedure used in large units, as well as during manual cleaning.

The five figures below show the individual parts of the automatic sheep and goats milking valve (figure 1), outer views of the assembled automatic sheep and goats milking valve (figures 2,3), the main body (figure 4), and the retaining nut (figure 5)

In particular:
- Figure 1:: Exploded view drawing showing the individual parts of the automatic sheep and goats milking valve

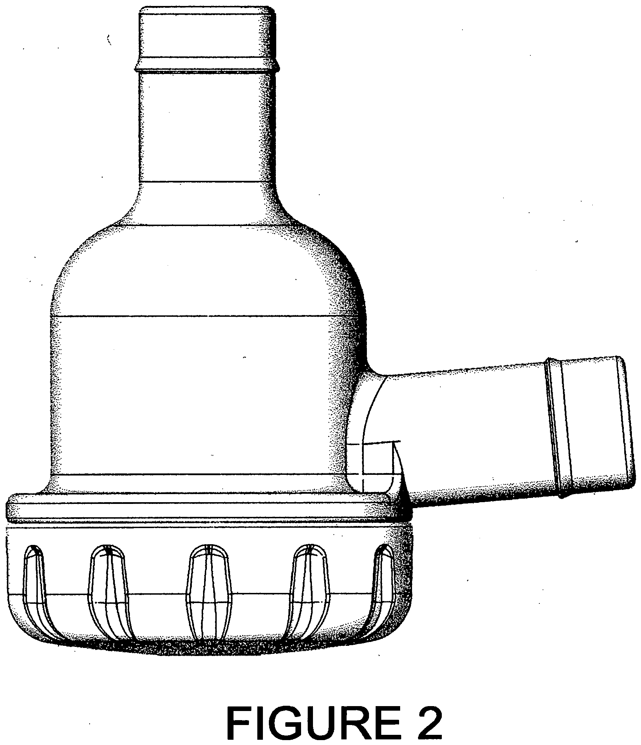

- Figure 2:: The automatic sheep and goats milking valve in milking operation position
- Figure 3:: The automatic sheep and goats milking valve in washing operation position

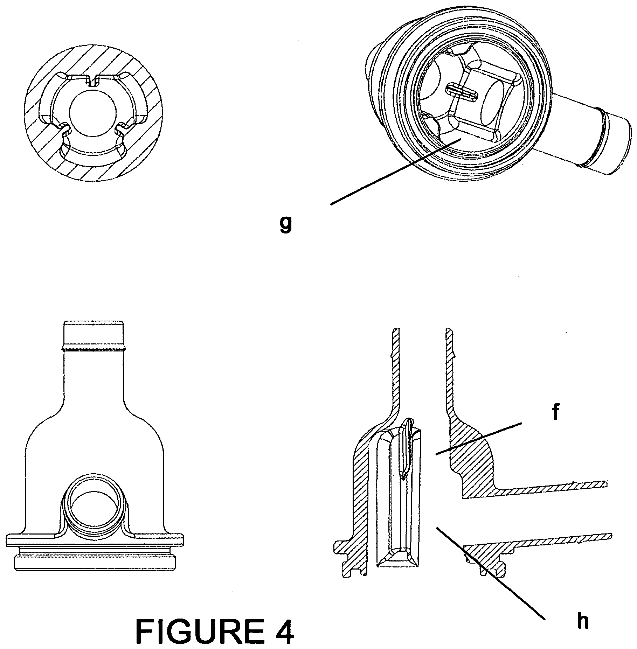

- Figure 4:: The main body of the automatic sheep and goats milking valve with its construction details from different angles of view

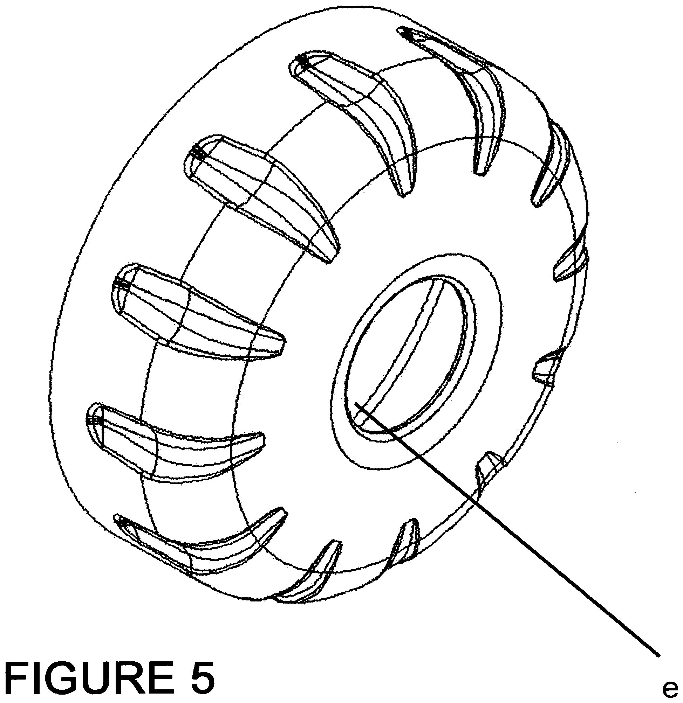

- Figure 5:: The retaining nut with its center hole that enables access to protrusion (d) for forced mechanical operation of the automatic sheep and goats milking valve

## Claims

1. Automatic sheep and goats milking valve (1) suitable for starting and stopping the milking process automatically, comprising a single milk inlet (a) and a single milk outlet (b), a milk chamber (g), a ball (2) and a membrane (3) opposite the milk inlet (a) and being made of appropriate plastic material, the milk inlet (a) and outlet (b) being placed at an angle to one another, the ball (2) being movable between upper and lower end points along the virtual extension of the milk inlet axis, which is, in the milking orientation of the valve, arranged perpendicularly to the ground, and the milk chamber (g) defining the ball's travel and enabling it to assume three positions: in the milking orientation of the valve (1) a lower end position (h) for closing the outlet (b) and an intermediate milking position for unblocking the outlet (b); and, in the reversed cleaning orientation, a lower end position (f) for unblocking the outlet (b), such that the ball is seated on the membrane (3) during milking and below the membrane (3) during cleaning, wherein the membrane (3) is retained by a cap (4) with a hole (e) and is elastically deformable under vacuum or external mechanical forces.

2. Automatic sheep and goats milking valve according to claim 1, **characterized by** the fact that the membrane can be elastically deformed (3) under vacuum in order to cause the ball (2) to move upwards during the milking start phase, and that the membrane (3) has two protrusions, one internal (c) for seating the ball (2), and one external (d), which, when externally pressed by hand, enables forced opening of the automatic sheep and goats milking valve

3. Automatic sheep and goats milking valve according to claims 1 or 2, **characterized by** the fact that it uses only gravity to bring the ball (2) back to its initial position and also to move the ball (2) to the washing position (f) and to keep the automatic sheep and goats milking valve open while being washed (i) without using a switch.

4. Automatic sheep and goats milking valve according to claim 1, **characterized by** the fact that it is made of transparent plastic material enabling visual inspection.

5. Automatic sheep and goats milking valve according to claim 1, **characterized by** the fact that the cap with the hole (e) enables external access to the external protrusion (d) of the membrane (3)

## Patentansprüche

1. Automatisches Schaf - und Ziegenmelkventil (1) geeignet zum automatischen Starten und Stoppen des Melkvorgangs, bestehend aus einem einzigen Milcheinlass (a) und einem einzigen Milchauslass (b), einer Milchkammer (g), einer Kugel (2) und einer dem Milcheinlass (a) gegenüberliegenden Membran (3) aus geeignetem Kunststoffmaterial, wobei der Milcheinlass (a) und - auslass (b) in einem Winkel zueinander angeordnet sind, wobei die Kugel (2) zwischen diesen bewegbar ist, obere und untere Endpunkte entlang der virtuellen Verlängerung der Milcheinlassachse, die in der Melkrichtung des Ventils senkrecht zum Boden angeordnet ist, und der Milchkammer (g), die den Weg der Kugel definiert und ihm ermöglicht, drei Positionen einzunehmen: In der Melkrichtung des Ventils (1) eine untere Endposition (h) zum Schließen des Auslasses (b) und eine Zwischenmelkposition zum Entsperren des Auslasses (b) und, in umgekehrter Reinigungsausrichtung, eine untere Endposition (f) zum Entsperren des Auslasses (b), so dass die Kugel auf der Membran (3) sitzt beim Melken und unterhalb der Membran (3) während der Reinigung, wobei die Membran (3) durch eine Kappe (4) mit einem Loch (e) gehalten wird und unter Vakuum oder äußeren mechanischen Kräften elastisch verformbar ist.

2. Automatisches Schaf- und Ziegenmelkventil nach Anforderung 1, **dadurch gekennzeichnet, dass** die Membran (3) im Vakuum elastisch verformbar ist, um während der Melkstartphase eine Aufwärtsbewegung der Kugel (2) zu bewirken, und dass die Membran (3) zwei Vorsprünge hat, einen inneren (c) zum Aufsetzen der Kugel (2), und einen äußeren (d), der, wenn er von Hand von außen gedrückt wird, ein erzwungenes Öffnen des automatischen Schaf- und Ziegenmelkventils ermöglicht

3. Automatisches Schaf- und Ziegenmelkventil nach den Anforderungen 1 oder 2, **gekennzeichnet durch** die Tatsache, dass es nur die Schwerkraft verwendet, um die Kugel(2) zurück in ihre Ausgangsposition zu bringen und auch die Kugel (2) in die Waschposition zu (f) bewegen und das automatische Schaf- und Ziegenmilchventil während des Waschens offen zu halten (i), ohne einen Schalter zu verwenden.

4. Automatisches Schaf- und Ziegenmelkventil nach Anforderung 1, **dadurch gekennzeichnet, dass** es aus durchsichtigem Kunststoff besteht, der eine Sichtprüfung ermöglicht.

5. Automatisches Schaf- und Ziegenmelkventil nach Anforderung 1, **dadurch gekennzeichnet, dass** die Kappe mit dem Loch (e) einen äußeren Zugang zu dem äußeren Vorsprung (d) der Membran (3) ermöglicht.

## Revendications

1. La vanne de traite automatique pour les moutons et les chèvres (1) est adaptée pour le démarrage et l'arrêt du processus automatique de traite, consistant en une entrée unique du lait (a) et une sortie unique du lait (b), une chambre de réception du lait (g), une sphère (2) et une membrane (3) en face de l'entrée du lait (a) et fait d'un matériau plastique appropriée, l'entrée du lait (a) et la sortie du lait (b) sont inclinées l'une à l'autre, la sphère (2) étant mobile entre l'extrémité supérieure et l'extrémité inférieure sur l'extensible axe virtuel de l'entrée du lait, laquelle se trouve à l'orientation de la valve de traite, disposée verticalement au sol, et la chambre de réception du lait (g) établie le mouvement de la sphère en la permettant de prendre trois positions : dans l'orientation de la valve de traite (1) à l'extrémité inférieure (f) pour fermer le canal de sortie (b) et une position intermédiaire de traite pour débloquer le canal de sortie (b) ; et dans l'orientation reversée de nettoyage, une position à l'extrémité inférieure (f) pour débloquer le canal de sortie (b), ainsi que la sphère se situe dans la membrane (3) pendant le traite et à l'inferieure de la membrane (3) pendant te lavage, où la membrane (3) est retenue par un bouchon doté d'un trou (e) et laquelle se peut déformer de manière élastique sous vide ou sous force mécanique externe.

2. La vanne de traite automatique pour les moutons et les chèvres selon la revendication 1, est **caractérise par le fait que** la membrane peut se déformer de manière élastique (3) sous vide afin de amener la sphères (2) dans un déplacement vers le haut pendant la phase de début du traite, et **par le fait que** la membrane (3) a deux protrusions, une intérieure (c) pour renfermer la sphère (2), et une externe (d), laquelle si extérieurement presse par la main, permet l'ouverture forcée de la vanne de traite automatique pour moutons et les chèvres.

3. La vanne de traite automatique pour les moutons et les chèvres selon la revendication 1 ou 2, est **caractérise par le fait qu'**elle utilise seulement la force de gravité pour amener la sphère (2) dans sa position initiale et pour bouger la sphère (2) dans une position de lavage (f) et pour maintenir la vanne de traite automatique pour les moutons et les chèvres ouverte pendant le lavage (i) sans utiliser un interrupteur.

4. La vanne de traite automatique pour les moutons et les chèvres selon la revendication 1, est **caractérise par le fait qu'**elle produit d'une matière transparente permettant l'inspection visuelle.

5. La vanne de traite automatique pour les moutons et les chèvres selon la revendication 1, est **caractérise par le fait que** le bouchon doté d'un trou (e) permet l'accès externe dans la protrusion extérieure (d) de la membrane (3).
